# EUROPEAN PATENT SPECIFICATION

(11) **EP 3 015 236 B1**
(45) Date of publication and mention of the grant of the patent: **21.02.2018**
(21) Application number: 15190790.4
(22) Date of filing: 21.10.2015
(51) Int. Cl.: B28D 1/24, C03B 33/10

(54) **METHOD OF SCRIBING THE SURFACE OF A THICK GLASS PLATE, AND SCRIBING WHEEL FOR SCRIBING THE SURFACE OF A SUCH A PLATE**
VERFAHREN ZUM RITZEN DER OBERFLÄCHE EINER DICKEN GLASSCHEIBE UND ANREISSRAD ZUM RITZEN DER OBERFLÄCHE EINER SOLCHEN SCHEIBE
PROCÉDÉ DE GRAVURE DE LA SURFACE D'UNE PLAQUE DE VERRE ÉPAISSE ET ROUE DE GRAVURE POUR GRAVER UNE TELLE PLAQUE

(30) Priority: 30.10.2014 JP 2014221231
(43) Date of publication of application: 04.05.2016
(73) Proprietor: Mitsuboshi Diamond Industrial Co., Ltd., Settsu Osaka 566-0034 (JP)
(72) Inventor: KAWABATA, Takashi, Settsu city,, Osaka 5660034 (JP); SOYAMA, Hiroshi, Settsu city,, Osaka 5660034 (JP); MURAKAMI, Kumiko, Settsu city,, Osaka 5660034 (JP)
(74) Representative: TBK

(56) References cited:
- EP-A1- 0 773 194
- WO-A1-2015/022873
- GB-A- 2 028 302
- JP-A- 2012 250 352
- US-A- 4 057 184

## Description

The present invention relates to a method of scribing a thick plate glass with a scribing wheel and a scribing wheel for scribing a surface of a thick plate glass according to the preamble of claim 3.

Such a scribing wheel is known from JP 2012 250352A from the same applicant, which shows on the figure 14 a scribing wheel with a blade edge angle Θ2 comprised between 90° and 160° and shows on the figure 15 a tip portion of a blade edge having a curved surface passing through a central axis with an unknown radius of curvature. A method of scribing a glass plate with such a wheel is also disclosed.

As tools for cutting glass substrates and ceramic substrates, for example, diamond points and scribing wheels are well known (for example, see document JP 2012-250352 A). Of these tools, the scribing wheel is generally a member having an approximately disc shape (abacus bead shape), whose outer peripheral portion serves as a blade edge. The scribing wheel rotatable supported by a predetermined support member is caused to roll under pressure on a to-be-cut object to scribe the to-be-cut object, thereby causing a vertical crack in the to-be-cut object (causing a vertical crack to penetrate the to-be-cut object). The to-be-cut object in which such a vertical crack is formed is normally cut with a predetermined cutting apparatus by further extending the vertical crack.

In cutting a thick plate glass having a thickness of 2.8 mm or more, such as a glass plate for vehicles, into a desired shape, there is a need to apply scribing with a scribing wheel to the formation of a cutting start point. Even if a well-known scribing wheel targeted for a thin plate glass is used to cut such a thick plate glass, however, it is difficult to form a vertical crack with a sufficient amount of penetration.

In the use of a scribing wheel grooved at regular intervals on the outer peripheral portion being a blade edge, though an amount of penetration increases, chipping, cracking, or the like occurs in a cut surface, resulting in poor cutting quality.

The cut surface of the thick plate glass after cutting is smoothened through a polishing process, but poor cutting quality may increase the time and effort required for the polishing process. Besides, the cut surface may not be smoothed sufficiently in the first place.

Document EP 0 773 194 A1 discloses a glass cutting disc in the form of a scribing wheel comprising a plurality of grooves along a ridge.

It is the object of the present invention to provide a scribing wheel that can form a vertical crack with a high penetration amount even for a thick plate glass and, in cutting thereafter, can suppress the occurrence of chipping or cracking in the thick plate glass and to provide a method of scribing a thick glass with the scribing wheel.

The present invention relates to a method of scribing a thick plate glass with a scribing wheel.

According to the present invention, a method of scribing a surface of a thick plate glass according to claim 1 includes the steps of: a) preparing a scribing wheel in which a blade edge angle is 150° or more and 160° or less and a tip portion of a blade edge is a curved surface whose radius of curvature in a cross section passing through a central axis is 9 µm or more and 40 µm or less; b) horizontally supporting the thick plate glass by placing the thick plate glass on a highly rigid table; and c) scribing the surface of the thick plate glass, with the thick plate glass being horizontally supported in the step b), by causing the scribing wheel to roll in a predetermined scribe-line forming direction while causing the blade edge of the scribing wheel to abut the surface of the thick plate glass simultaneously with causing a scribing load adjusted to a predetermined value in advance in accordance with a quality of material and a thickness of the thick plate glass to be applied from the blade edge to the thick plate glass.

According to another aspect of the present invention, a scribing wheel for scribing a surface of a thick plate glass according to claim 3 has a configuration in which a blade edge angle is 150° or more and 160° or less, and a tip portion of the blade edge is a curved surface having a radius of curvature of 9 µm or more and 40 µm or less in a cross-section passing through a central axis.

According to the invention above, scribing in which the penetration rate of a vertical crack is high and chipping is suppressed can be achieved even for a thick plate glass being a scribing target.

### BRIEF DESCRIPTION OF THE DRAWINGS

FIG. 1 illustrates scribing in a first embodiment;
FIG. 2 is a cross-sectional view of a scribing wheel 10;
FIG. 3 is an enlarged view of a portion A of FIG. 2;
FIG. 4 is an optical micrograph of a cut surface obtained by scribing a soda glass as a plate-shaped glass G and then cutting the soda glass along a scribe line formed;
FIGS. 5A and 5B each illustrate the state of a surface of the plate-shaped glass G after the formation of a scribe line; and
FIG. 6 illustrates scribing according to a second embodiment.

### First Embodiment

### Outline of Scribing

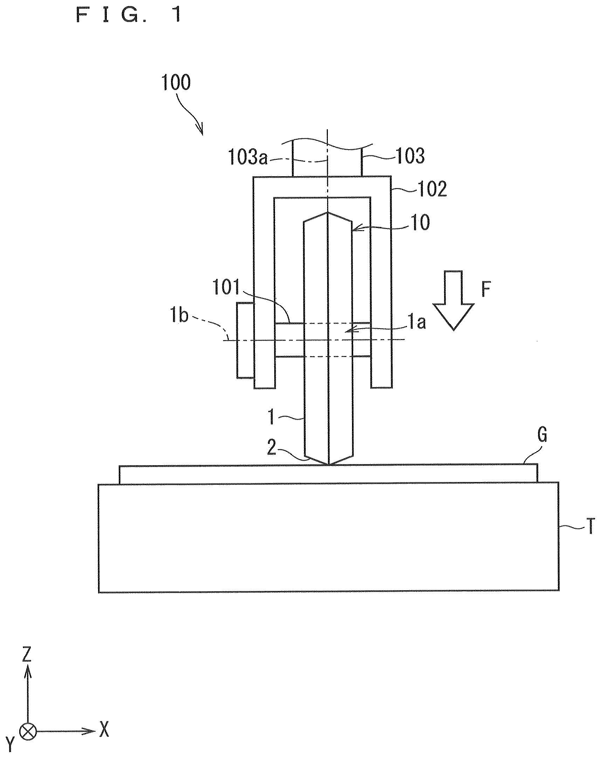

FIG. 1 illustrates scribing in a first embodiment of the present invention. FIG. 1 shows how a plate-shaped glass G horizontally supported on a table T from below is scribed with a scribing wheel 10. FIG. 1 and subsequent figures are provided with a right-handed XYZ coordinate system, where the horizontal plane is an XY plane, a Y-axis direction is the roll direction of the scribing wheel 10 (that is, a scribe-line forming direction), and the vertical direction is a Z-axis direction.

The plate-shaped glass G to be scribed in this embodiment is, for example, a plate-shaped soda glass or borosilicate glass. In this embodiment, particularly, a thick plate glass having a thickness of 2.8 mm or more is the plate-shaped glass G to be scribed.

A table that is horizontal and flat at least in its surface and is highly rigid, for example, a table made of iron with an anodized surface, is preferably used as the table T.

The scribing wheel 10 is a tool that forms a scribe line on the surface of the plate-shaped glass G. The scribe line is formed by the scribing wheel 10 being rolled on the surface under pressure. The scribing wheel 10 is pivotally supported in a rotatable manner in a vertical plane by a scanning mechanism 100 that is a mechanism for causing the scribing wheel 10 to move relative to the surface in the Y-axis direction while being pressed against the surface.

The scanning mechanism 100 includes a pin 101 inserted into and fixed to a through hole 1a of the scribing wheel 10, a support frame body 102 that pivotally supports the pin 101 in a rotatable manner, and a support shaft 103 that extends in the vertical direction and supports the support frame body 102 from above.

More specifically, in the scanning mechanism 100, the pin 101 inserted into and fixed to the through hole 1a of the scribing wheel 10 is pivotally supported by the support frame body 102 in a rotatable manner, thereby allowing the scribing wheel 10 to rotate in the plane (YZ plane) vertical to a central axis 1b. Thus, with the scribing wheel 10 abutting the plate-shaped glass G while the scribing wheel 10 is applying a predetermined scribing load F to the plate-shaped glass G, the scanning mechanism 100 is moved relative to the plate-shaped glass G, so that a scribe line is formed along the relative moving direction of the scribing wheel 10 (in FIG. 1, the Y-axis direction) on the abutment surface of the plate-shaped glass G.

The adjustment of the scribing load F is enabled by adjusting the height position of the portion of the scanning mechanism 100 at least below the support shaft 103. For example, the adjustment is enabled by an approach of depressing this portion with, for example, a cylinder (not shown).

In the case where the relative movement of the scanning mechanism 100 to the plate-shaped glass G is made by actually moving the scanning mechanism 100, the scanning mechanism 100 is equipped with a horizontal drive mechanism (not shown). In the case where the relative movement is made by moving the table T supporting the plate-shaped glass G, the table T is equipped with a horizontal drive mechanism (not shown). Alternatively, the scanning mechanism 100 and the table T each may be provided with a horizontal drive mechanism such that the relative movement of the scanning mechanism 100 to the plate-shaped glass G is enabled with the use of any one of or both of the horizontal drive mechanisms. A known configuration is applicable to both of the horizontal drive mechanisms.

In the scanning mechanism 100, further, the support frame body 102 and the support shaft 103 supporting the support frame body 102 may be provided so as to pivot with an axis 103a extending in the Z-axis direction as an axis of rotation and, still further, the position of the support shaft 103 in the horizontal plane and the insertion position of the pin 101 may be displaced from each other in the Y-axis direction. With such a configuration, the scanning mechanism 100 can achieve a so-called caster effect in which the attitude of the support frame body 102 becomes parallel to the YZ plane immediately after the start of scribing even if the attitude of the support frame body 102 in the horizontal plane is not parallel to the YZ plane in start of scribing.

### Details of Scribing Wheel

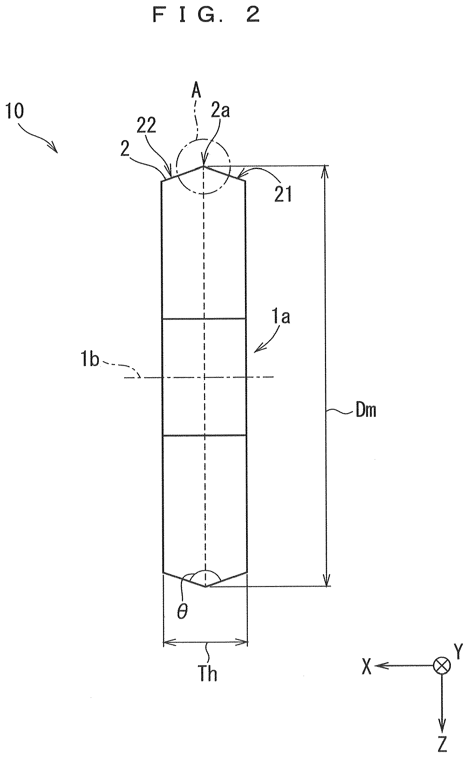

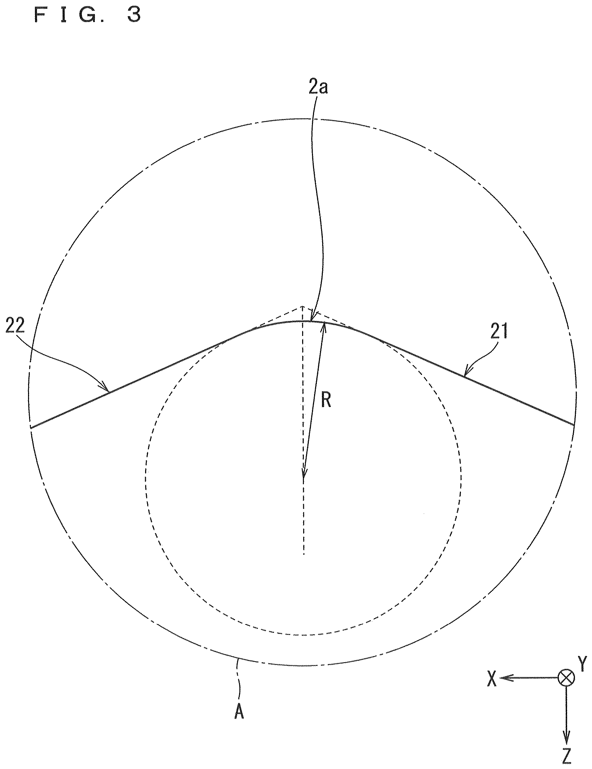

FIG. 2 is a cross-sectional view of the scribing wheel 10 (including the central axis 1b). FIG. 3 is an enlarged view of a portion A of FIG. 2.

The scribing wheel 10 used in scribing in this embodiment is a member having an approximately disc shape (abacus bead shape). In other words, the scribing wheel 10 can be said that it has a shape obtained by connecting two circular truncated cones on their lower bottom (larger bottom) side. The scribing wheel 10 includes a circular main body I and a blade edge portion 2 provided concentrically with the main body 1 in the outer peripheral portion of the main body 1. The scribing wheel 10 is produced by cutting out, for example, a plate material of cemented carbide or a plate material of diamond such as sintered diamond, polycrystal diamond, or single-crystal diamond into a shape shown in FIG. 2.

An outside diameter Dm of the scribing wheel 10 is preferably 3 mm, or more and 6 mm or less. A thickness Th of the scribing wheel 10 is preferably 0.65 mm or more and 1.50 mm or less. If the outside diameter Dm is smaller than 3 mm or the thickness Th is smaller than 0.65 mm, scribing at such a load that can form a deep vertical crack in the plate-shaped glass G becomes difficult. This is because the inside diameter of the through hole 1a and the outside diameter of the pin 101 cannot be made sufficiently large. Meanwhile, if the outside diameter Dm is larger than 6 mm or the thickness Th is larger than 1.50 mm, it is difficult for a vertical crack to prelerably penetrate the plate-shaped glass G. This conceivably results from the contact area between the scribing wheel 10 and the plate-shaped glass G becoming too large in scribing. Excessively increasing the outside diameter Dm or the thickness Th is not preferable in terms of a rising material cost and a rising processing cost of the scribing wheel 10.

As described above, the scribing wheel 10 has the through hole 1a. The through hole 1a is provided along the central axis 1b of the scribing wheel 10, that is, provided at the central position of the main body 1 along its thickness direction.

As shown in FIG. 2, schematically, two surfaces (surfaces corresponding to the lateral surfaces of the circular truncated cone) 21 and 22 of the blade edge portion 2 that are respectively adjacent to different main surfaces of the main body 1 form an angle θ, so that the blade edge portion 2 has a V shape in cross section (in the cross-section of the scribing wheel 10 including the central axis 1b). Thus, the thickness of the blade edge portion 2 becomes smaller as closer to its outer peripheral portion (that is, as closer to the outer periphery of the scribing wheel 10). The angle θ formed by the two surfaces 21 and 22 of the blade edge portion 2 is referred to as a blade edge angle. A scribing wheel 10 having such a blade edge angle θ of 150° or more and 160° or less, preferably, a scribing wheel 10 having such a blade edge angle θ of 150° or more and 155° or less is used in this embodiment. The value of the blade edge angle θ can be said as a large value considering that the blade edge angel of a scribing wheel used to, for example, cut a thin plate glass for FPD is approximately 100° to 135°.

With reference to FIG. 2, at first glance, the blade edge portion 2 appears to be formed by the two surfaces 21 and 22 being adjacent to each other. In actuality, however, as shown in FIG. 3, the blade edge portion 2 has a curved surface (blade-edge curved surface) 2a at its distal end portion. The blade-edge curved surface 2a is annularly provided between the two surfaces 21 and 22 constituting the blade edge portion 2, that is, provided in the outermost peripheral portion of the scribing wheel 10. The blade-edge curved surface 2a is provided so as to have a radius of curvature R of 9 µm or more and 40 µm or less when viewed in the cross section including the central axis 1b of the scribing wheel 10. The width of the blade-edge curved surface 2a in the thickness direction of the scribing wheel 10 is approximately 5.0 µm to 15 µm.

Although it suffices that the blade-edge curved surface 2a is provided uniformly (without asperities) along the circumferential direction of the scribing wheel 10, a recessed portion (grooved portion) may be intentionally provided in the blade-edge curved surface 2a.

The above-mentioned scribing wheel 10, which has a blade edge angel θ of 150° or more and 160° or less, preferably, 150° or more and 155° or less and includes the blade edge portion 2 formed of the blade-edge curved surface 2a whose tip portion has a radius of curvature R of 9 µm or more and 40 µm or less, is used to perform scribing while applying a scribing load F corresponding to the thickness and the material of the plate-shaped glass G and the shape of the scribing wheel 10 per se, thereby enabling scribing even for a plate-shaped glass G having a thickness of 2.8 mm or more, in which the penetration amount of a vertical crack is large (penetration is high) and the occurrence of so-called chipping, such as chipping or cracking, is preferably suppressed in the edge portion of the cut surface in cutting after scribing. In this embodiment, high-penetration scribing means that the ratio of the penetration (hereinafter, referred to as a penetration rate) of a vertical crack to the thickness of the plate-shaped glass G is 50% or more. When the occurrence of chipping falls within the range of 300 µm or less from the edge portion of the cut surface, the occurrence of chipping is considered to be preferably suppressed. Even if the occurrence of chipping exceeds 300 µm, when it falls within the range of 700 µm or less, the cut plate-shaped glass G can be subjected to a subsequent process.

It suffices that the relative moving speed (scribing speed) of the scribing wheel 10 to the plate-shaped glass G in such scribing is 100 mm/s to 1000 mm/sec. In execution of scribing, an oil such as kerosene is dropped and applied onto a scribing target position of the plate-shaped glass G.

For example, in the case where the plate-shaped glass G to be cut is soda glass, scribing in which penetration is high and chipping is preferably suppressed can be performed by adjusting the scribing load of the scribing wheel 10 within the range of approximately 47 N to 160 N depending on the thickness of the plate-shaped glass G and the condition of a scribing wheel.

Meanwhile, in the case where the plate-shaped glass G to be cut is borosilicate glass, scribing in which penetration is high and chipping is preferably suppressed to such an extent that no problem arises in a subsequent process can be performed by adjusting the scribing load of the scribing wheel 10 within the range of approximately 125 N to 240 N depending on the thickness of the plate-shaped glass G and the condition of a scribing wheel.

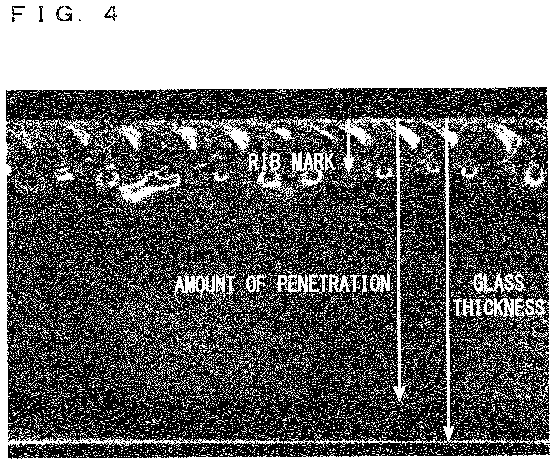

FIG. 4 is an optical micrograph of a cut surface obtained by preparing a soda glass having a thickness of 3.7 mm as the plate-shaped glass G, performing scribing at a scanning speed of 300 mm/s with the scribing wheel 10 in which the blade edge angle θ of the blade edge portion 2 is 155° and the radius of curvature R of the blade-edge curved surface 2a is 13 µm, and then performing cutting along a formed scribe line. The penetration amount on the cut surface is 3.23 mm, which is much larger than 0.67 mm, the depth of a rib mark formed by the scribing wheel 10 contacting the soda glass. The penetration rate is approximately 87.3%. This indicates that high-penetration scribing can be performed for the plate-shaped glass G having a large thickness.

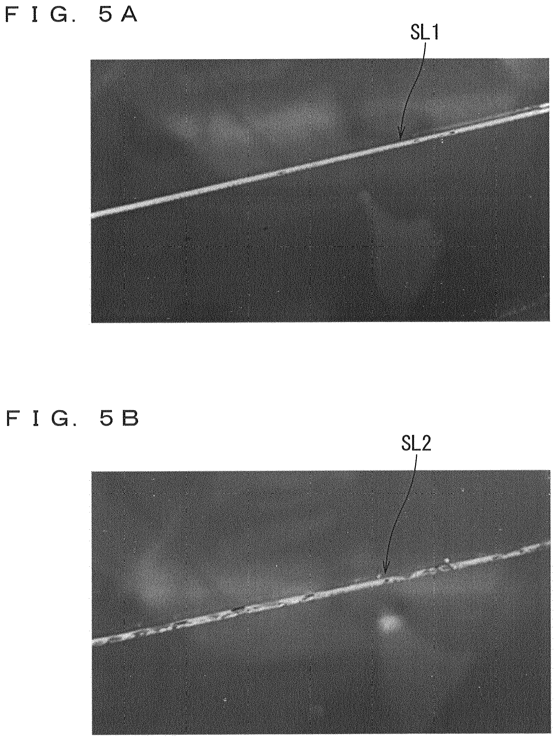

FIGS. 5A and 5B each illustrate the state of the surface of the plate-shaped glass G after the formation of a scribe line in the case where the plate-shaped glass G is soda glass as well. FIG. 5A is an optical micrograph of a scribe line (rib mark) SL1, where the occurrence of chipping is preferably suppressed. Meanwhile, FIG. 5B is an optical micrograph of a scribe line (rib mark) SL2, where chipping occurs significantly. The comparison between FIGS. 5A and 5B reveals that the line shape (width) is substantially uniform in FIG. 5A, whereas in FIG. 5B, a wave or shark teeth occur in the rib mark, resulting in an uneven line shape.

### Second Embodiment

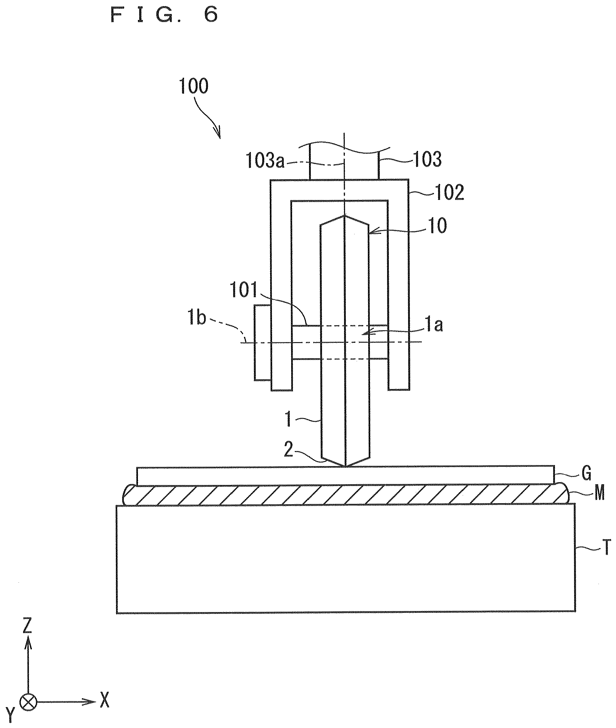

FIG. 6 illustrates scribing according to a second embodiment, which is performed differently from the first embodiment. Specifically, the first embodiment describes the case where the plate-shaped glass G is directly supported on the table T, whereas in scribing in this embodiment shown in FIG. 6, a mat M is first placed on the table T, and then, the plate-shaped glass G is placed horizontally on the mat M. The mat M contains, for example, felt as its material and is somewhat elastic.

Although scribing for the plate-shaped glass G in such a case can also be performed in a manner similar to that described above, the condition of the scribing wheel 10 that enables high-penetration scribing differs from the condition in the case where the plate-shaped glass G is placed directly on the table T, due to the elasticity of the mat M. Specifically, it is preferable to use a scribing wheel 10 that includes a blade edge portion 2 whose blade edge angle θ is 150° to 155° and whose tip portion is formed of a blade-edge curved surface 2a having a radius of curvature of 13 µm or more and 40 µm or less. In such a case, by performing scribing while applying a scribing load F corresponding to the shape of the thickness and the quality of material of the plate-shaped glass G and the shape of the scribing wheel 10 per se, scribing in which penetration is high and the occurrence of chipping on the cut surface is preferably suppressed can be performed even for a plate-shaped glass G having a thickness of 2.8 mm or more.

### Examples

Scribing in the first embodiment was performed while varying scribing conditions as Examples 1 to 18, and then, the state of penetration of a vertical crack and the state of the occurrence of chipping were evaluated.

Specifically, a total of 18 levels of scribing conditions, each of which has a varying combination of the quality of material and the thickness of the plate-shaped glass G, the outside diameter, the radius of curvature R, and the blade edge angle θ of the scribing wheel 10, and further the scribing speed, were prepared, and scribing was performed multiple times on each condition while varying the scribing load F. Subsequently, the plate-shaped glass G was cut along each scribe line formed, and then a penetration rate was calculated from an optical microscope image of the cut surface. Although the scribing wheel 10 was produced from cemented carbide, a similar tendency was found also in the case where the scribing wheel 10 was produced from sintered diamond.

Table 1 shows specific scribing conditions of the respective examples, and evaluation results of the state of penetration of a vertical crack and the state of the occurrence of chipping. For the column "high penetration" of the evaluation items of Table 1, "○" (circle) is placed for the calculated penetration rate of 50% or more, and "× " (christcross) is placed for the calculated penetration rate less than 50%. For the column "chipping," "○" is placed in the case where no chipping occurred or in the case where chipping that has occurred falls within the range of 300 µm or less from the edge of the cut surface, "Δ" (triangle) is placed in the case where the range of chipping that has occurred is larger than 300 µm and 700 µm or less from the edge, and "×" is placed in the case where the range of chipping that has occurred is larger than 700 µm from the edge. In the case where high-penetration scribing was not achieved (in the case where " × " is placed in the column "high penetration"), chipping was not evaluated.

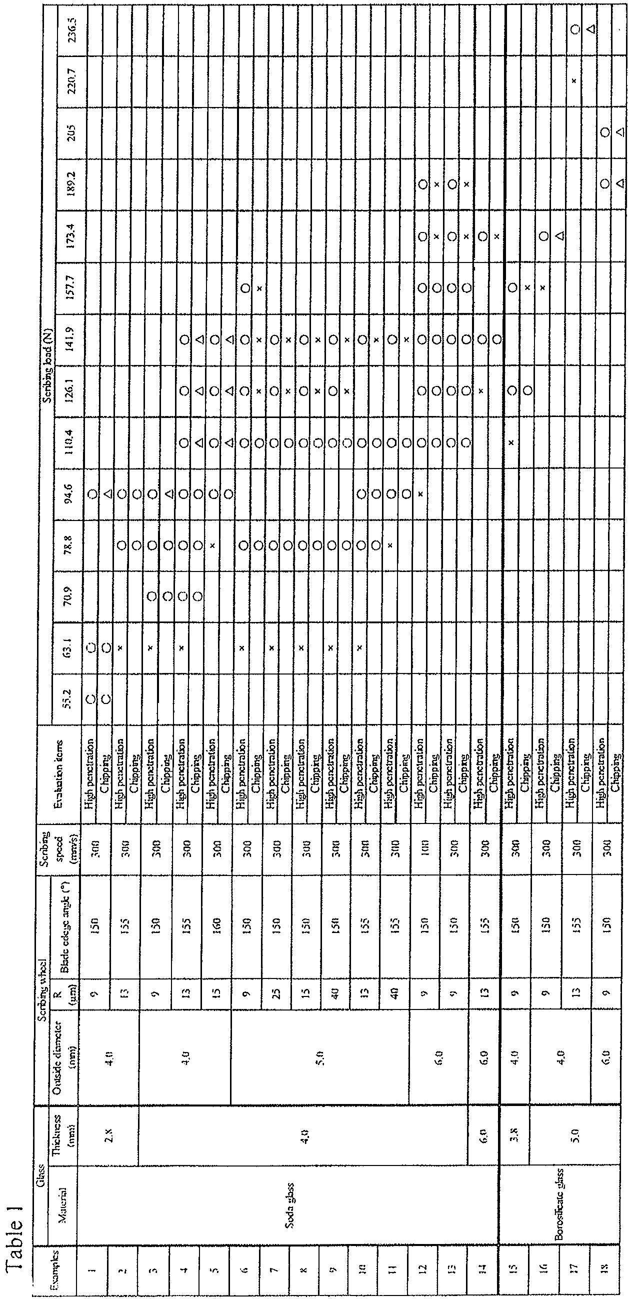

Similarly, scribing in the second embodiment was performed while varying the scribing conditions as Examples 19 to 23, and the penetration rate and the state of chipping were evaluated. However, the plate-shaped glass G was only the soda glass having a thickness of 4 mm, and the conditions of the outside diameter and the scribing speed of the scribing wheel 10 were fixed to 4 mm and 300 mm/sec, respectively. Table 2 shows, for the respective examples, specific scribing conditions, and the evaluation results of the state of penetration of a vertical crack and the state of the occurrence of chipping.

**Table 2**

| Examples | Glass | | Scribing wheel | | | Scribing speed (mm/s) | Evaluation items | Scribing load (N) | | | | | | |
|---|---|---|---|---|---|---|---|---|---|---|---|---|---|---|
| | Material | Thickness (mm) | Outside diameter (mm) | R (µm) | Blade edge angle (°) | | | 78.8 | 94.6 | 110.4 | 126.1 | 134.0 | 141,9 | 157.7 |
| 19 | Soda glass | 4.0 | 5,0 | 9 | 150 | 300 | High penetration | × | × | × | × | | × | × |
| | | | | | | | Chipping | | | | | | | |
| 20 | | | 5.0 | 25 | 150 | 300 | High penetration | × | ○ | ○ | × | | × | |
| | | | | | | | Chipping | | ○ | ○ | | | | |
| 21 | | | 5,0 | 15 | 150 | 300 | High penetration | × | ○ | ○ | × | | | |
| | | | | | | | Chipping | | ○ | ○ | | | | |
| 22 | | | 5.0 | 13 | 155 | 300 | High penetration | × | ○ | ○ | ○ | | ○ | |
| | | | | | | | Chipping | | ○ | ○ | × | | × | |
| 23 | | | 5.0 | 40 | 155 | 300 | High penetration | × | × | × | × | ○ | ○ | ○ |
| | | | | | | | Chipping | | | | | ○ | ○ | × |

As shown in Tablets 1 and 2, in Examples 1 to 15 and Examples 20 to 23, the range of the scribing load F in which high penetration was achieved and chipping was preferably suppressed was present. Such results mean that scribing can be performed preferably even for a plate-shaped glass G having a thickness of, for example, 2.8 mm or more through scribing by using a scribing wheel whose blade edge angle θ and radius of curvature R are set in a predetermined range in accordance with how the plate-shaped glass G is supported and by applying a scribing load F corresponding to the quality of material and the thickness of the plate-shaped glass G.

Provided is a scribing method capable of preferably forming a vertical crack with a high penetration amount even for a thick plate glass and, in cutting thereafter, suppressing the occurrence of chipping or cracking in the thick plate glass. A scribing wheel, in which a blade edge angle is 150° or more and 160° or less and a tip portion of a blade edge is a curved surface whose radius of curvature in a cross section passing through a central axis is 9 µm or more and 40 µm or less, is prepared. Then, with the thick plate glass, placed on a highly rigid table, being horizontally supported, the surface of the thick plate glass is scribed by causing the scribing wheel to roll in a predetermined scribe-line forming direction while causing the blade edge of the scribing wheel to abut the surface of the thick plate glass simultaneously with causing a scribing load adjusted to a predetermined value in advance in accordance with a quality of material and a thickness of the thick plate glass to be applied from the blade edge to the thick plate glass.

## Claims

1. A method of scribing a surface of a thick plate glass (G), comprising the steps of:
a) preparing a scribing wheel (10) in which a blade edge angle (ϑ) is 150° or more and 160° or less and a tip portion (2a) of a blade edge (2) is a curved surface whose radius of curvature in a cross section passing through a central axis is 9 µm or more and 40 µm or less;
b) horizontally supporting said thick plate glass (G) by placing said thick plate glass (G) on a highly rigid table (T); and
c) scribing said surface of said thick plate glass (G), with said thick plate glass (G) being horizontally supported in said step b), by causing said scribing wheel (10) to roll in a predetermined scribe-line forming direction while causing said blade edge (2) of said scribing wheel (10) to abut said surface of said thick plate glass (G) simultaneously with causing a scribing load adjusted to a predetermined value in advance in accordance with a quality of material and a thickness of said thick plate glass (G) to be applied from said blade edge (2) to said thick plate glass (G).

2. The method of scribing a thick plate glass according to claim 1, wherein a scribing wheel (10) having an outside diameter (Dm) of 4 mm or more and 6 mm or less is used as said scribing wheel (10).

3. A scribing wheel for scribing a surface of a thick plate glass (G), said scribing wheel (10) having a configuration in which
a blade edge angle (ϑ) is 150° or more and 160° or less,
and
a tip portion (2a) of a blade edge (2) is a curved surface having a radius of curvature in a cross-section passing through a central axis, **characterized in that** said radius of curvature is of 9 µm or more and 40 µm or less.

4. The scribing wheel according to claim 3, wherein an outside diameter (Dm) is 4 mm or more and 6 mm or less.

## Patentansprüche

1. Verfahren zum Ritzen der Oberfläche einer dicken Glasscheibe (G) mit den Schritten:
a) Vorbereiten eines Anreißrads (10) in dem ein Klingenkantenwinkel (θ) 150° und mehr und 160° oder weniger beträgt, und ein Spitzenabschnitt (2a) einer Klingenkante (2) eine gekrümmte Oberfläche ist, deren Krümmungsradius in einem durch eine Mittelachse durchtretenden Querschnitt 9 µm oder mehr und 40 µm oder weniger beträgt;
b) horizontal Lagern der dicken Glasscheibe (G) auf einem hochsteifen Tisch (T); und
c) Ritzen der Oberfläche der dicken Glasscheibe (G) mit in dem Schritt b) horizontal gelagerten der dicken Glasscheibe (G), in der verursacht wird, dass das Anreißrad (10) in einer vorbestimmten Ritzlinienausbildungsrichtung rollt, während verursacht wird, dass die Klingenkante (2) des Anreißrads (10) gegen die Oberfläche der dicken Glasscheibe (G) gleichzeitig mit einem Verursachen einer Ritzlast in Anlage ist, die im Voraus auf einen vorbestimmten Wert angepasst ist und gemäß einer Materialqualität und einer Dicke der dicken Glasscheibe (G) von der Klingenkante (2) auf die dicke Glasscheibe (G) aufgebracht wird.

2. Verfahren zum Ritzen einer dicken Glasscheibe nach Anspruch 1, wobei ein Anreißrad (10), das einen Außendurchmesser (Dm) von 4 mm oder mehr als 6 mm oder weniger aufweist, als das Anreißrad (10) verwendet wird.

3. Ein Anreißrad zum Ritzen einer Oberfläche einer dicken Glasscheibe (G), wobei das Anreißrad (10) eine Konfiguration aufweist, in der
ein Klingenkantenwinkel (θ) 150° oder mehr und 160° oder weniger beträgt und
ein Spitzenabschnitt (2a) einer Klingenkante (2) eine gekrümmte Oberfläche ist, die einen Krümmungsradius in einem durch eine Mittelachse durchtretenden Querschnitt aufweist,
**dadurch gekennzeichnet, dass**
der Krümmungsradius 9 µm oder mehr und 40µm oder weniger beträgt.

4. Anreißrad nach Anspruch 3, wobei ein Außendurchmesser (Dm) 4 mm oder mehr und 6 mm oder weniger beträgt.

## Revendications

1. Procédé de gravure d'une surface d'un verre en plaque épaisse (G), comprenant les étapes consistant à :
a) préparer une roulette de gravure (10) dans laquelle un angle de taillant de lame (θ) est de 150° ou plus et de 160° ou moins et une partie de pointe (2a) d'un taillant de lame (2) est une surface incurvée dont le rayon de courbure en coupe transversale passant à travers un axe central est de 9 µm ou plus et de 40 µm ou moins ;
b) supporter horizontalement ledit verre en plaque épaisse (G) en plaçant ledit verre en plaque épaisse (G) sur une table hautement rigide (T) ; et
c) graver ladite surface dudit verre en plaque épaisse (G), ledit verre en plaque épaisse (G) étant supporté horizontalement dans ladite étape b), en amenant ladite roulette de gravure (10) à rouler dans une direction formant une ligne de gravure prédéterminée tout en amenant ledit taillant de lame de ladite roulette de gravure (10) à s'appuyer sur ladite surface dudit verre en plaque épaisse (G) en provoquant simultanément l'application d'une charge de gravure ajustée à une valeur prédéterminée à l'avance en fonction d'une qualité de matériau et d'une épaisseur dudit verre en plaque épaisse (G) dudit taillant de lame (2) audit verre en plaque épaisse (G).

2. Procédé de gravure d'un verre en plaque épaisse selon la revendication 1, dans lequel une roulette de gravure (10) ayant un diamètre externe (Dm) de 4 mm ou plus et de 6 mm ou moins est utilisée comme dite roulette de gravure (10).

3. Roulette de gravure pour graver une surface d'un verre en plaque épaisse (G), ladite roulette de gravure (10) ayant une configuration dans laquelle :
un taillant d'arête de lame (θ) est de 150° ou plus et de 160° ou moins et
une partie de pointe (2a) d'un taillant de lame (2) est une surface incurvée ayant un rayon de courbure dans une section transversale passant à travers un axe central, **caractérisée en ce que** ledit rayon de courbure est de 9 µm ou plus et de 40 µm ou moins.

4. Roulette de gravure selon la revendication 3, dans laquelle un diamètre externe (Dm) est de 4 mm ou plus et de 6 mm ou moins.
